# NEUE EUROPÄISCHE PATENTSCHRIFT

(11) **EP 2 110 193 B2**
(45) Veröffentlichungstag und Bekanntmachung des Hinweises auf die Entscheidung über den Einspruch: **04.04.2018**
(45) Hinweis auf die Patenterteilung: 26.01.2011
(21) Anmeldenummer: 09156645.5
(22) Anmeldetag: 30.03.2009
(51) Int. Cl.: B23C 3/18, B23P 15/00, F01D 5/34

(54) **Verfahren zum Fräsen von Blisks**
Method for blisk milling
Procédé de fraisage d'un disque aubagé monobloc (Blisk)

(30) Priorität: 16.04.2008 DE 102008019332
(43) Veröffentlichungstag der Anmeldung: 21.10.2009
(73) Patentinhaber: Rolls-Royce Deutschland Ltd & Co KG, 15827 Blankenfelde-Mahlow (DE)
(72) Erfinder: Riedel, Gregor, 63654, Büdingen (DE); Holze, Liane, 61267, Neu-Anspach (DE)
(74) Vertreter: Maikowski & Ninnemann Patentanwälte Partnerschaft mbB

(56) Entgegenhaltungen:
- DE-A- 2 544 612
- DE-B3- 10 312 224
- GB-A- 2 385 815
- GB-A- 2 385 815
- JP-A- S6 144 521
- US-A- 1 933 798
- US-A- 2 633 776
- US-A- 2 633 776
- US-A- 3 127 506
- US-A- 4 596 501
- US-A- 4 596 501
- US-A- 6 077 002
- US-A1- 2003 039 547
- US-A1- 2003 039 547
- URS BLATTER: 'Effiziente Bliskfertigung mit Starrag -Software-Modul PSI_F' PSI5D/USERS GUIDE Bd. 20, 01 Januar 1998, CALIFORNIA/USA,

## Beschreibung

Die Erfindung betrifft ein Verfahren zum Fräsen von Blisks für Gasturbinentriebwerke, bei dem am Umfang eines Scheibenrohlings durch Schruppen eine vielzahl integral ausgebildeter Bliskschaufeln vorgeformt und anschließend durch Schlichten der Druck- und Saugseite sowie des Annulus fertig bearbeitet werden.

Für die Verdichter von Gasturbinentriebwerken werden bekanntermaßen auch Blisks eingesetzt, bei denen die Laufschaufeln mit der Rotorscheibe integral zu einer einstückigen, eine Einheit bildenden Anordnung verbunden sind. Abgesehen von den verhinderten Montagekosten gegenüber Laufrädern mit herkömmlicher Beschaufelung, bei denen separat gefertigte Laufschaufeln in einer am Umfang der Rotorscheibe ausgebildeten schwalbenschwanzförmigen Nut gehalten sind, zeichnen sich integral beschaufelte Rotoren durch ein geringeres Gewicht und eine Reduzierung der Zentrifugalbelastungen in den Tragscheibe aus, so dass eine Vielzahl von Schaufeln angeordnet und letztlich ein höherer aerodynamischer Wirkungsgrad erzielt werden kann.

Die Herstellung von Blisks erfolgt entweder durch Verbinden separat gefertigter Schaufelteile mit einer Tragscheibe durch Reibschweißen oder ein von der Außenumfangsfläche eines Scheibenrohlings ausgehendes Fräsen der Schaufelkonturen aus dem vollen Material.

Die Laufschaufeln haben eine komplexe dreidimensionale Gestalt, indem sie sich typischerweise um eine radiale Achse winden, sich vom Fuß zur Spitze hin verjüngen und eine konkav geformte Druckseite sowie eine konvex geformte Saugseite aufweisen und deren Schaufelspitze nicht parallel zum Schaüfelfuß verläuft. Die spangebende Herausarbeitung dieser Schaufeln aus dem vollen Material erfolgt üblicherweise durch Punktkontaktfräsen mit einem einen halbkugelförmigen Fräskopf aufweisenden Fräswerkzeug. Durch Schrupper wird zunächst ein Kanal erzeugt, während in einem anschließenden Schlichtfräsprozess die Druck- und die Saugseite und schließlich der Annulus fertig bearbeitet werden. Das Schruppen des Kanals und das anschließende Schlichten der Seitenwände kann auch abschnittsweise im Wechsel durchgeführt werden, und zwar bis schließlich der Annulus erreicht wird und dieser geschlichtet werden kann, Der Begriff "Annulus" umfasst im Folgenden auch den übergangsbereich zwischen den Seitenflächen der Schaufel und dem Annulus.

Das oben erwähnte, beispielsweise in der US 6077002 A, die ein Verfahren nach dem Oberbegriff des Anspruch 1 offenbart, beschriebene Schlichtfräsen im Punktkontakt zur Ausformung der Seitenflächen der Laufschaufeln ist insofern nachteilig, als der Prozess zeitaufwändig ist und mit den langen Laufzeiten und dem entsprechend hohen Werkzeugverbrauch auch hohe Werkzeug- und Herstellungskosten verbunden sind. Durch die Abnutzung des Fräswerkzeugs infolge langer Laufzeiten beim Schlichten der Seitenflächen ist die Maßhaltigkeit der Schaufeln, die mit steigender Werkzeugläufzeit und entsprechender Abnutzung immer dikker werden, nicht gewahrleistet.

Eine weniger zeitaufwändige Methode zum Schlichten der Seitenflächen der dreidimensional geformten Blisks ist das fünfachsige Flankenfräsen, bei dem mit einem Schaftfräser, dessen Nerkzeugachse parallel zu den Schaufelflächen geführt wird, entlang der Saugseite und der Druckseite parallel zum Fuß der Schaufel flächige Streifen geschnitten werden. Durch die Anwendung des Flankenfräsens können der Werkzeugverschleiß und die Merkzeugkosten verringert und sowohl die Maßhaltigkeit der einzelnen Schaufeln als auch deren Oberflächenqualität verbessert werden. Dennoch treten auch bei Bliskschaufeln mit der durch Flankenfräsen erzeugten Oberflächenqualität an der Saug- und Druckseite der Schaufeln nachteilige aerodynamische Verluste auf.

Der Erfindung liegt die Aufgabe zugrunde, ein Verfahren zum Fräsen von Blisks anzugeben, mit dem die aerodynamischen Verluste reduziert werden können.

Erfindungsgemäß wird die Aufgabe mit einem Verfahren gemäß den Merkmalen des Patentanspruchs 1 gelöst Vorteilhafte Weiterbildungen und zweckmäßige Ausgestaltungen der Erfindung sind Gegenstand der Unteransprüche.

Beim Fräsen von dreidimensional geformten Bliskschaufeln aus dem vollen. Material eines Scheibenrohlings werden die Seitenflächen der durch Schruppen zunächst vorgeformten Bliskschaufeln anschließend durch Flankenfräsen geschlichtet und dabei auf das Fertigmaß gebracht. Die Bewegungsrichtung des Fräswerkzeugs bzw. der Verlauf der beim Flankenfräsen erzeugten Frässtreifen stimmt mit der Strömungsrichtung der Gase an den Druck- und den Saugseiten der Bliskschaufeln während des Einsatzes im Triebwerk überein, so dass die aerodynamischen Verluste an den Schaufelflächen verringert werden können.

Gemäß einer Verfahrensvariante verlaufen die von der Schneidflanke eines Fräswerkzeugs erzeugten - gleich breiten - Frässtreifen an der Schaufelspitze und am Annulus (Übergangsfläche zum Annulus) parallel zu diesen, wobei ein aufgrund der schrägen Ausrichtung der Schaufelspitze und des Annulus bestehender Längenunterschied zwischen Schaufelvorder- und - hinterkante, das heißt eine sich ändernde Schaufellänge und ein zueinander schräger Verlauf von Schaufelspitze und Annulus, durch ein fächerartiges Überlappen der Frässtreifen ausgeglichen wird. Aufgrund des überlappenden Fräsens wird zudem die Höhe der absätze zwischen den Frässtreifen verringert, so dass die Strömungsverhältnisse an den Schaufelflächen weiter verbessert und der Polieraufwand an den Schaufelflächen reduziert wird.

Ausgehend von der Schaufelspitze und dem Annulus werden parallel zu diesen und zueinander verlaufende Fräsbahnen erzeugt, wobei sich die Frässtreifen im Übergangsbereich zwischen den zur Schaufelspitze und zum Annulus parallelen Frässtreifen überlappen oder überschneiden. Vorzugsweise können in dieser Ausführungsvariante die parallel zur Schaufelspitze erzeugten Frässtreifen bis vor den höchsten Punkt am Annulus verlaufen, so dass nur nahe am Annulus parallel zu diesem verlaufende Frässtreifen erzeugt werden.

Ein Ausführungsbeispiel der Erfindung wird anhand der Zeichnung, in der
- Fig. 1: einen Scheibenrohling während des Schruppfräsens eines ersten Kanals und des Schlichtens einer Schaufeldruckseite durch Flankenfräsen mit einem Schaftfräser;
- Fig. 2: eine gemäß einer Verfahrensvariante hergestellte Bliskschaufel mit fächerförmig überlappenden Frässtreifen: und
- Fig. 3: eine gemäß einer nicht erfindungsgemäßen Verfahrensvariante gefräste Bliskschaufel mit parallelen Frässtreifen
wiedergibt, näher erläutert.

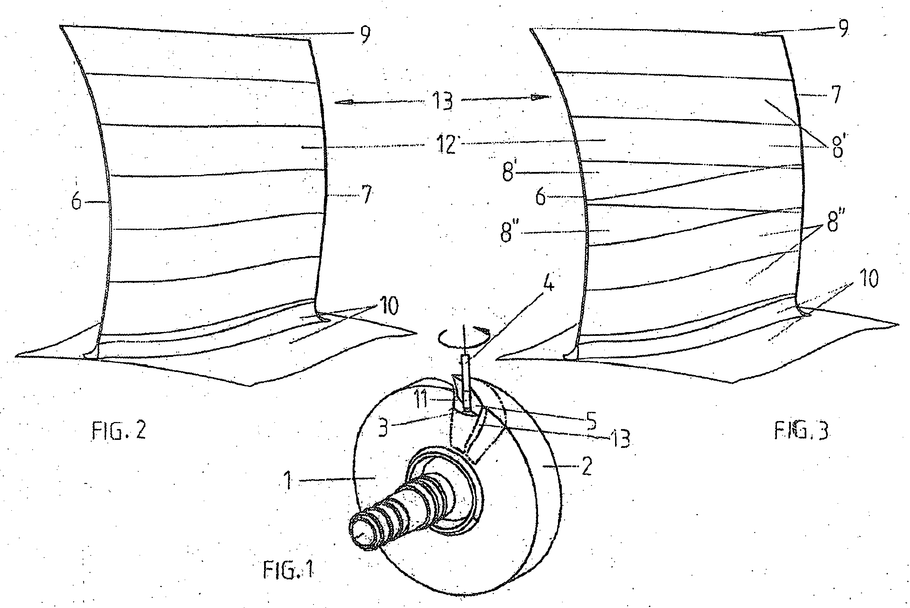

Wie Fig. 1 zeigt, wird in einen Scheibenrohling 1 ausgehend von dessen umfangsfläche 2 zunächst mit dem halbkugelförmigen Fräserkopf 3 eines - hier nur schematisch dargestellten - Schaftfräsers 4 ein Kanal 5 durch Schruppbearbeitung eingeschnitten. Anschließend erfolgt die Fertigbeärbeitung (Schlichten) der Seitenflächen des Kanals 5, das heißt der Druck- und Saugseite einer Bliskschaufel 13, durch fünfachsiges Flankenfräsen mit der sich an einen halbkugelförmigen Fräserkopf 3 anschließenden Schheidflanke 11 des Schaftfräsers 4. Dabei wird eine Vielzahl von quer über die Druckseite und die Saugseite, das heißt zwischen der SchaufelVorderkante 6 und der Schaufelhinterkante 7 verlaufenden Frässtreifen 8 von konstanter Streifenbreite gefräst.

Fig. 2 zeigt - mit Blick auf die konvex gekrümmte Saugseite 12 - eine nach dem Fräsen zweier benachbarter Kanäle 5 erzeugte, dreidimensional geformte Bliskschaufel 13, deren zwischen der schaufelspitze 9 und dem Annulus 10 bzw. der Obergangsfläche zum Annulus 10 verlaufende Schaufelvorderkante 6 und Schaufelhinterkante 7 eine unterschiedliche Länge aufweisen. Dennoch verlaufen die Frässtreifen 8 von der Schaufelvorderkante 6 zur Schaufelhinterkante 7 in der beim Einsatz der Blisk zwischen den Schaufeln herrschenden Strömungsrichtung, indem die Frässtreifen 8 beim Schlichten so erzeugt werden, das sie an der Schaufelspitze 9 und am Annulus 10 parallel zu diesen verlaufen und die Frässtreifen 8 ansonsten so erzeugt werden, dass sie sich von der längeren Schaufelvorderkante 6 zur kürzeren Schaufelhinterkante 7 hin überlappen. Das heißt, die Frässtreifen 8 sind fächerförmig angelegt und gehen dadurch von der an der Schaufelspitze 9 und am Annulus 10 jeweils parallelen Anordnung in dem dazwischen liegenden. Bereich von der Neigung an der Schaufelspitze die anders ausgerichtete Neigung am Annulus 10 über. Durch den gerundeten Übergang von der Schneidflanke 11 des Schaftfräsers 4 zu einem halbkugelförmigen Fräserkopf 3 wird zwischen den benachbarten Frässtreifen 8 ein sanfter Übergang erzeugt. In gleicher Weise werden die Frässtreifen 8 auf der hier nicht dargestellten Druckseite erzeugt. Der Frässtreifenverlauf entspricht somit auf beiden Schaufelseiten dem Strömungsverlauf, so dass die aerodynamischen Verluste verringert werden. Zusätzlich werden die aerodynamischen Verluste noch dadurch weiter reduziert, dass die Üblicherweise zwischen den benachbarten Frässtreifen bestehenden Absätze durch das überlappende Flankenfräsen überschliffen werden und somit deren Größe deutlich verringert wird. Gleichzeitig wird der Aufwand bei einem nachfolgenden Polieren der Schäufelflächen gesenkt.

Gemäß einer anderen - in Fig. 3 dargestellten - Ausführungsvariante werden die in konstanter Breit erzeugten Frässtreifen 8' über einen bestimmten Teil der Schaufellänge ohne Überlappung von der Schaufelvorderkante 6 zur Schaufelhinterkante 7 parallel zum Verlauf der Schaufelspitze 9 und die weiteren Frässtreifen 8" in dem restlichen Schaufelteil parallel zum Annulus 10 angelegt. An der Schnittstelle der beiden Bereiche überschneiden sich ein zur Schaufelspitze 9 und ein zum Annulus 10 paralleler Frässtreifen 8' und 8". Die zur Schaufelspitze 9 parallelen Frässtreifen 8' können in dieser Form bis zum höchsten Funkt am Annulus 10 angelegt werden, während die Frässtreifen 8" nur in dem verbleibenden kleinen Bereich parallel zum Annulus 10 ausgeführt werden. Auch in diesem Fall besieht im Wesentlichen Übereinstimmung zwischen der Strömungsrichtung und der Ausrichtung der Frässtreifen 8', 8", so dass die aerodynamischen Verluste an den Druck- und Saugseiten der Bliskschaufeln 13 minimiert werden können.

### Bezugszeichenliste

- 1: Scheibenrohling
- 2: Umfangsfläche
- 3: Fräserkopf
- 4: Schaftfräser
- 5: Kanal
- 6: Schaufelvorderkante
- 7: Schaufelhinterkante
- 8: Frässtreifen, überlappend
- 8',8": Frässtreifen, parallel
- 9: Schaufelspitze
- 10: Annulus, übergangsfläche
- 11: Schneidflanke
- 12: Saugseite
- 13: Bliskschaufel

## Patentansprüche

1. Verfahren zum Fräsen von Blisks für Gasturbinentriebwerke, bei dem am Umfang eines Scheibenrohlings (1) durch Schruppen eine Vielzahl integral ausgebildeter, dreidimensional gestalteter Bliskschaufeln (13) vorgeformt und anschließend durch Schlichten der Druck- und Saugseite sowie des Annulus (10) fertig bearbeitet werden,
**dadurch gekennzeichnet, dass**
das Schlichten der Druck- und Saugseiten durch Flänkenfräsen mit einem der Strömungsrichtung zwischen den Bliskschaufeln (13) entsprechenden Verlauf der von der Schneidflanke eines Fräswerkzeugs (4) erzeugten Frässtreifen (8, 8', 8") gleicher Breite erfolgt und dass die Frässtreifen (8) zwischen der Schaufelvorder- und -hinterkante (6, 7) fächerförmig überlappend angelegt werden, wobei die an der Schaufelspitze (9) und am Annulus (10) liegenden Frässtreifen (8) parallel zu diesen verlaufen und die dazwischen liegenden Frässtreifen (8) allmählich von der Neigung des Frässtreifens an der Schaufelspitze in die Neigung des Frässtreifens am Annulus (10) übergehen, und wobei beim überlappenden Ausbilden eines Frässtreifens der von dem vorhergehenden Frässtreifen gebildete Absatz sanft überschliffen wird.

2. Verfahren nach einem der Ansprüche 1, **dadurch gekennzeichnet, dass** als Fräswerkzeug ein Schaftfräser (4) eingesetzt wird, dessen zum Schneiden der Fräsbahnen (8) vorgesehene gerade Schneidflanke an einen halbkugelförmigen Fräserkopf anschließt.

## Claims

1. Method for the milling of blisks for gas-turbine engines, where at the periphery of a disk blank (1) a multitude of integrally provided three-dimensional blisk blades (13) is pre-shaped by rough milling and subsequently finish machined by finish milling of the pressure and suction sides as well as of the annulus (10), **characterized in that** finish milling of the pressure and suction sides is accomplished by flank milling, with a profile of the - equally wide - cutting strips (8, 8', 8") produced by the cutting edge of a cutter (4) agreeing with the direction of flow between the blisk blades (13) and **in that** the cutting strips (8) between the blade leading and the blade trailing edge (6, 7) overlap each other in a fan-like manner, with the cutting strips (8) at the blade tip (9) and at the annulus (10) extending parallelly to these and the cutting strips (8) between them gradually transiting from the inclination of the cutting strip at the blade tip to the inclination of the cutting strip at the annulus (10), and - in providing overlapping cutting strips - the step formed by the preceding cutting strip being smoothly machined over by grinding.

2. Method in accordance with one of the Claims 1, **characterized in that** a shank-type cutter (4) is used as cutting tool, whose straight cutting edge provided for producing the cutting strips (8) adjoins a semi-spherical cutting head.

## Revendications

1. Procédé de fraisage de disques BLISK (disques aubagés monoblocs) pour moteurs à turbine à gaz, dans lequel une pluralité d'aubes de disque BLISK (13) formée intégralement et tridimensionnelle sont préformées par dégrossissage sur la circonférence d'une ébauche de disque (1), puis terminées par aplanissement du côté refoulement et aspiration ainsi que de la zone de transition annulaire (10), **caractérisé en ce que** l'aplanissement du côté refoulement et aspiration est réalisé par fraisage sur flanc avec des bandes de fraisage (8, 8', 8") de largeurs égales générées par le flanc de coupe d'un outil de fraisage (4) et dont le tracé correspond au sens d'écoulement entre les aubes de disque BLISK (13) et **en ce que** les bandes de fraisage (8) entre les bords d'attaque et de fuite de l'aube (6, 7) sont aménagées avec chevauchement en éventail, dans lequel les bandes de fraisage (8) situées sur le bout d'aube (9) et sur la zone de transition annulaire (10) sont parallèles à eux, et l'inclinaison des bandes de fraisage (8) intermédiaires passe progressivement de l'inclinaison de la bande de fraisage sur le bout d'aube à l'inclinaison de la bande de fraisage sur la zone de transition annulaire (10), et dans lequel lorsqu'une bande de fraisage est formée avec chevauchement, l'épaulement formé par la bande de fraisage précédente est finement rectifié.

2. Procédé selon une des revendications n° 1,
**caractérisé en ce qu'**est utilisée comme outil de fraisage une fraise à queue (4) dont le flanc de coupe droit prévu pour découper les bandes de fraisage (8) se raccorde à une tête de fraise hémisphérique.
